# EUROPEAN PATENT SPECIFICATION

(11) **EP 1 242 430 B1**
(45) Date of publication and mention of the grant of the patent: **28.05.2008**
(21) Application number: 00978745.8
(22) Date of filing: 16.11.2000
(51) Int. Cl.: C07F 7/20, C08G 77/34, D06L 1/04, D06L 1/02, D06L 1/08

(54) **Dry cleaning process**
Verfahren zur Trockenreinigung
Procédé de nettoyage à sec

(30) Priority: 17.12.1999 US 466484; 12.04.2000 US 547517
(43) Date of publication of application: 25.09.2002
(73) Proprietor: GENERAL ELECTRIC COMPANY, Schenectady, NY 12345 (US)
(72) Inventor: PERRY, Robert, James, Niskayuna, NY 12309 (US); RICCIO, Donna, A., Watervliet, NY 12189 (US)
(74) Representative: Herrmann, Uwe
(86) International application number: PCT/US2000/031556
(87) International publication number: WO 2001/044256

(56) References cited:
- EP-A- 0 277 825
- EP-A- 0 543 665
- DE-A- 3 739 711
- US-A- 2 834 753
- US-A- 4 661 612
- US-A- 5 312 947
- PATENT ABSTRACTS OF JAPAN vol. 016, no. 144 (C-0927), 10 April 1992 (1992-04-10) & JP 04 004224 A (SHIN ETSU CHEM CO LTD), 8 January 1992 (1992-01-08)

## Description

The present invention is directed to a dry cleaning process, more specifically, to a process for stabilizing silicone dry cleaning solvents containing acidic impurities.

### BACKGROUND

Current dry cleaning technology uses perchloroethylene ("PERC") or petroleum based materials as the cleaning solvent. PERC suffers from toxicity and odor issues. The petroleum-based products are not as effective as PERC in cleaning garments. Volatile siloxanes are being introduced into the dry cleaning in dustry as an alternative to PERC. However, there exists a need to stabilize the siloxane solvents to prevent undesirable cyclic siloxane (D₄) formation and polymerization.

Methods for the purification of organopolysiloxanes have previously been reported, but they have not been reported for the purification of certain cyclic siloxanes (D₅). Methods for purifying organopolysiloxanes utilizing elemental metals have been reported (see US 5,245,067). Other patents disclose the purification of polyether silicones by contacting with an aqueous acid and removing the odorous materials formed (see US 5,118,764), or the reaction with hydrogen and a hydrogenation catalyst (see US 5,225,509). Hexamethyldisiloxane has been purified by successive treatments with a condensation catalyst, washing with water, separating the phases, distilling the siloxane, treating with acid clay and then treating with activated carbon (see US 4,774.346). Siloxanes have also been purified by contacting with steam and distilling out the impurities (see EP 543 665). A deodorization method utilizing active carbon to which a functional group has been fixed through a silanol bond has been reported (see US 5,238,899). Finally, a method was reported for purifying silicone oil by adding a drying agent and an adsorption agent to silicone and passing a low water vapor insert gas through the system (see US 4,661,612).

DE 3 739 711 discloses the use of polydialkylcyclosiloxanes as a solvent in a dry cleaning process.

What is needed in the art is an aqueous extraction system that renders the acidic catalyst inactive, stabilizes the siloxane and suppresses reequilibration and polymerization allowing re-use of the silicone solvent in a dry cleaning process.

### SUMMARY OF THE INVENTION

A dry cleaning process comprising:
(a) contacting the article with a silicone solvent;
(b) removing the silicone solvent;
(c) contacting the removed silicone solvent with an aqueous solution;
(d) allowing the silicone solvent and aqueous solution to separate into layers;
(e) separating the silicone solvent layer from the aqueous layer;
(f) optionally drying the silicone solvent with a drying agent,
(g) wherein the solvent is a linear or branched siloxane comprising one or more compounds of the structural formula (I):

   M_{2+y+2z}DₓT_{y}Q_{z}

   wherein:
   M is R¹₃SiO_{1/2};
   D is R²₂siO_{2/2};
   T is R³SiO_{3/2;}
   and Q is SiO_{4/2};
   R¹, R² and R³ are each independently a monovalent hydrocarbon radical; and
   x and y are each integers, wherein 0 ≤x ≤10 and 0 ≤y ≤10 and 0 ≤z ≤10.

The process of the present invention is effective in preventing formation of certain cyclic siloxanes (i.e., D₄) that are undesirable in the silicone solvent.

As used herein, the terms D₄, D₅ and D₆ refer to cyclic siloxanes having the formula: -(R₂SiO)ₓ- where x is 4, 5 or 6 (i.e., D₅ is decamethylcyclopentasiloxane).

### DETAILED DESCRIPTION OF THE INVENTION

Preferably, the first preferred embodiment of the process of the present invention comprises, contacting a silicone dry cleaning solvent that may contain an undesirable acidic impurity capable of causing cyclic siloxane formation with an aqueous solution, agitating to ensure good mixing of the solvent and the aqueous solution, and separating the silicone solvent. Optionally, a drying agent may be used to dry the solvent. Preferably, the silicone dry cleaning solvent is a volatile linear, branched, cyclic or a combination thereof, siloxane.

Acidic impurities rendered inactive in the present invention are those that typically promote equilibration and redistribution. Examples of acids that promote reequilibration and redistribution include, but are not limited to, LPNC, sulfuric acid, hydrochloric acid, methanesulfonic acid, dodecylbenzenesulfonic acid, p-toluenesulfonic acid, and the like.

Solutions suitable as extractants are aqueous solutions of the formula:

MeX

wherein Me refers to alkali metals and alkaline earth metals, such as sodium, magnesium, potassium, calcium and the like, and X refers to halogens, such as chlorine, bromine, fluorine and the like, or chalcogen derivatives, such as sulfates, carbonates, bicarbonates, acetates and the like. Examples of suitable solutions include but are not limited to sodium chloride, potassium chloride, sodium bromide, magnesium sulfate and the like. Also suitable as extractants are water and dilute base mixtures such as sodium carbonate and sodium bicarbonate. Mixtures of two or more extractants may also be used. Preferably, the extractant is water.

After extraction, the silicone solvent may be dried with a suitable drying agent. Compounds suitable as the optional drying agent are those that remove the water from the silicone solvent. Examples of suitable drying agents include, for example, 4A molecular sieves, 13X molecular sieves, magnesium sulfate, calcium chloride and calcium sulfate.

Preferably, the silicone dry cleaning solvent is a volatile linear, branched, or a combination thereof, siloxane as defined under formula (I).

Compounds suitable as the linear or branched, volatile siloxane solvent of the present invention are those containing a polysiloxane structure that includes from 2 to 20 silicon atoms. Preferably, the linear or branched, volatile siloxanes are relatively volatile materials, having, for example, a boiling of below about 300°C point at a pressure of 760 millimeters of mercury ("mm Hg").

Suitable monovalent hydrocarbon groups include acyclic hydrocarbon radicals, monovalent alicyclic hydrocarbon radicals, monovalent and aromatic hydrocarbon radicals. Preferred monovalent hydrocarbon radicals are monovalent alkyl radicals, monovalent aryl radicals and monovalent aralkyl radicals.

As used herein, the term "(C₁-C₆)alkyl" means a linear or branched alkyl group containing from 1 to 6 carbons per group, such as, for example, methyl, ethyl, propyl, iso-propyl, n-butyl, iso-butyl, sec-butyl, tert-butyl, pentyl, hexyl, preferably methyl.

As used herein, the term "aryl" means a monovalent unsaturated hydrocarbon ring system containing one or more aromatic rings per group, which may optionally be substituted on the one or more aromatic rings, preferably with one or more (C₁-C₆)alkyl groups and which, in the case of two or more rings, may be fused rings, including, for example, phenyl, 2,4,6-trimethylphenyl, 2-isopropylmethylphenyl, 1-pentalenyl, naphthyl, anthryl, preferably phenyl.

As used herein, the term "aralkyl" means an aryl derivative of an alkyl group, preferably a (C₂-C₆)alkyl group, wherein the alkyl portion of the aryl derivative may, optionally, be interrupted by an oxygen atom, such as, for example, phenylethyl, phenylpropyl, 2-(1-naphthyl)ethyl, preferably phenylpropyl, phenyoxypropyl, biphenyloxypropyl.

In a preferred embodiment, the monovalent hydrocarbon radical is a monovalent (C₁-C₆)alkyl radical, most preferably, methyl.

In a preferred embodiment, the linear or branched, volatile siloxane comprises one or more of, hexamethyldisiloxane, octamethyltrisiloxane, decamethyltetrasiloxane, dodecamethylpentasiloxane, tetradecamethylhexasiloxane or hexadecamethylheptasiloxane or methyltris(trimethylsiloxy)silane. In a more highly preferred embodiment, the linear or branched, volatile siloxane of the present invention comprises octamethyltrisiloxane, decamethyltetrasiloxane, or dodecamethylpentasiloxane or methyltris(trimethylsiloxy)silane. In a highly preferred embodiment, the siloxane component of the composition of the present invention consists essentially of decamethyltetrasiloxane.

Suitable linear or branched volatile siloxanes are made by known methods, such as, for example, hydrolysis and condensation of one or more of tetrachlorosilane, methyltrichlorosilane, dimethyldichlorosilane, trimethylchlorosilane, or by isolation of the desired fraction of an equilibrate mixture of hexamethyldisiloxane and octamethylcyclotetrasiloxane or the like and are commercially available.

It is believed that those dry cleaning solvents useful in the present invention that lack a cyclic siloxane component would be more stable than those which include a cyclic siloxane component, in that cyclic siloxanes are known to ring open and polymerize under acidic and basic conditions.

In a first embodiment of the process of the present invention, approximately 100 parts by weight ("pbw") of siloxane solvent that may contain up to 0.1, preferably up to 0.01, even more preferably up to 0.001 pbw of an acidic impurity is contacted with up to 1000, more preferably up to 500, even more preferably up to 100 pbw of an aqueous solution for about 0.0025 to about 6 hours, more preferably form about 0.001 to about 1 hours, even more preferably from about 0.01 to about 5 hours, at a temperature of from about 10 to 80ºC, more preferably from about 20 to about 60°C. After the siloxane solvent has contacted the aqueous solution for the appropriate time, the mixture of the siloxane solvent and aqueous solution is allowed to settle to form layers, and the aqueous solution is removed by separation, or optionally, separation and drying with an appropriate drying agent.

After removal of the acidic impurities, the solvent can be recycled in the dry cleaning apparatus. The method of the present invention effectively reduces the level of impurities, preferably acidic impurities, in the silicone solvent.

The process of the present invention comprises a dry cleaning process comprising the steps of contacting an article with a silicone solvent, and removing the silicone solvent, then treating the silicone solvent that has been removed with an aqueous solution, agitating to ensure good mixing of the solvent and the aqueous solution, and separating the silicone solvent, then reusing the treated silicone solvent in the dry cleaning process. The process of the present invention optionally includes the step of drying the solvent prior to reusing it in the dry cleaning process.

The following examples illustrate the process of the present invention. They are illustrative and the claims are not to be construed as limited to the examples.

### EXAMPLES

Decamethylcyclopentasiloxane (Dₛ) that was used as a dry cleaning solvent was mixed with an add (LPNC) to make a stock solution containing 200 parts per million ("ppm") LPNC. Aliquots of the stock solution were heated to 100°C to determine if the mixture would undergo reequilibration and polymerization (increased D₄ and D₆ levels as well as increased viscosity). The results of the control experiments are shown in Table 1 below. Without any added acid, the D₅ was stable at 100°C for 24 hours, In the presence of 200 ppm LPNC, the viscosity rapidly increased over 7 hours and the composition was unable to be determined.

**Table 1- Polymerization and Reequilibration of D₅ with LPNC**

| **Exp #** | **Temp (°C)** | **LPNC (ppm)** | **Rxn Time (h)** | **%D₄** | **% D₅** | **% D₆** | **Rxn Time (h)** | **% D₄** | **% D₅** | **% D₆** | **Visc. Increase** |
|---|---|---|---|---|---|---|---|---|---|---|---|
| Control | 100 | None | 0 | <0.2 | 99.46 | 0.47 | 24 | <0.2 | 99.46 | 0.47 | No |
| 1 | 100 | 200 | 7 | - | - | - | 24 | - | - | - | Gel* |

| | | | | | | | | | | | |
|---|---|---|---|---|---|---|---|---|---|---|---|
| *Viscosity was too high to measure. | | | | | | | | | | | |

The acid impurities may be rendered inactive by removing them from the siloxane solvent via liquid-liquid extraction. To remove the acidic impurities, the siloxane solvent (either a linear CMD₂M) or cyclic (D₅) siloxane) containing 1000 ppm of dodecylbenzenesulfonic acid (DDBSA) was contacted with water for 1 minute. The layers were allowed to separate, and the water was removed by separation. In some of the examples, the solvent was also dried with a drying agent The solution was heated to 100°C for 4 hours and cyclic levels were measured. Heat was then continued until 24 hours, and cyclic levels were again measured. Tables 2 and 3 shows the results of cyclic formation.

**Table 2 - Extraction of 1000 ppm add (DDBSA) from D₅ with 1 min contact time**

| **Exp. #** | **Dry Yes/No** | **Rxn time (h)** | **% D₄** | **% D₅** | **% D₆** | **Rxn time (h)** | **% D₄** | **% D₅** | **% D₆** |
|---|---|---|---|---|---|---|---|---|---|
| 40 | Yes | 4 | <0.1 | 99.52 | 0.48 | 24 | 6.5 | 93.08 | 0.4 |
| 41 | No | 4 | 4.39 | 93.65 | 1.96 | 24 | 2.1 | 95.84 | 2.06 |

**Table 3 - Extraction of 1000 ppm acid (DDBSA) from MD₂M with 1 min contact time**

| **Exp. #** | **Dry Yes/ No** | **Rxn time (h)** | **% MM** | **% MDM** | **% MO₂M** | **% MD₃M** | **Rxn time (h)** | **% MM** | **% MDM** | **% MD₂M** | **% MD₃M** |
|---|---|---|---|---|---|---|---|---|---|---|---|
| 42 | yes | 4 | 0 | 0 | 99.9 | 0 | 24 | 0 | 0 | 99.9 | 0 |
| 43 | no | 4 | 2.35 | 2.15 | 92.86 | 1.48 | 24 | 3.28 | 6.12 | 82.7 | 4.13 |

As shown in Tables 1 and 2, drying the solvents after contact with water produced better results than when used wet (at 1000 ppm).

The acidic impurity readily initiated polymerization and reequilibration of the D₅ as shown by example 1. Contacting the contaminated silicone solvent with water and then separating the solvent gave a stable silicone mixture that did not polymerize or reequilibrate.

The process of the present invention is effective in reducing the level of acidic impurities in the silicone solvent.

## Claims

1. A dry cleaning process comprising:
(a) contacting the article with a silicone solvent;
(b) removing the silicone solvent;
(c) contacting the removed silicone solvent with an aqueous solution;
(d) allowing the silicone solvent and aqueous solution to separate into layers;
(e) separating the silicone solvent layer from the aqueous layer;
(f) optionally drying the silicone solvent with a drying agent,
(g) wherein the solvent is a linear or branched siloxane comprising one or more compounds of the structural formula:
M_{2+y+2z}DₓT_{y}Q_{z}
wherein:
M is R¹₃SiO_{1/2};
D is R²₂SiO_{2/2;}
T is R³SiO_{3/2};
and Q is SiO_{4/2;}
R¹, R² and R³ are each independently a monovalent hydrocarbon radical; and
x and y are each integers, wherein 0 ≤x ≤10 and 0 ≤y ≤10 and 0 ≤z ≤10.

2. The process of claim 1, further comprising agitating to ensure good mixing of the solvent and the aqueous solution.

3. The process of claim 1, wherein the aqueous solution is water, a salt solution, weak base mixture, or combination thereof.

4. The process of claim 1, wherein the aqueous solution used is up to 1000 parts by weight per 100 parts by weight of silicone solvent.

5. The process of claim 1, wherein the contact time with the drying agent is from about 0.0025 to about 6 hours.

6. The process of claim 1, wherein the silicone solvent is contacted with the aqueous solution at a temperature from about 10°C to about 80°C.

## Patentansprüche

1. Verfahren zur Trockenreinigung, mit den folgenden Schritten:
(a) der Gegenstand wird mit einem Siliconlösungsmittel in Kontakt gebracht;
(b) das Siliconlösungsmittel wird entfernt;
(c) das entfernte Siliconlösungsmittel wird mit einer wässrigen Lösung in Kontakt gebracht;
(d) das Siliconlösungsmittel und die wässrige Lösung lässt man sich in Schichten trennen;
(e) die Schicht des Siliconlösungsmittels wird von der wässrigen Schicht getrennt;
(f) das Siliconlösungsmittel wird optional mit einem Trocknungsmittel getrocknet,
(g) wobei das Lösungsmittel ein lineares oder verzweigtes Siloxan ist, das ein oder mehr Verbindungen der folgenden Strukturformel umfasst:
M_{2+y+2z}DₓT_{y}Q_{z}
worin:
M ist R¹₃SiO_{1/2};
D ist R²₂SiO_{2/2};
T ist R³SiO_{3/2};
und Q ist SiO_{4/2};
R¹, R² und R³ sind jeweils unabhängig voneinander ein einwertiges Kohlenwasserstoffradikal; und x und y sind jeweils ganze Zahlen, wobei 0 ≤
x ≤ 10 und 0 ≤ y ≤10 und 0 ≤ z ≤ 10.

2. Verfahren nach Anspruch 1, bei dem ferner gerührt wird, um eine gute Vermischung von Lösungsmittel und wässriger Lösung sicherzustellen.

3. Verfahren nach Anspruch 1, bei dem die wässrige Lösung Wasser, eine Salzlösung, ein schwaches Basengemisch oder eine Kombination davon ist.

4. Verfahren nach Anspruch 1, bei dem die verwendete wässrige Lösung bis zu 1000 Gewichtsteile pro 100 Gewichtsteile Siliconlösungsmittel beträgt.

5. Verfahren nach Anspruch 1, bei dem die Kontaktzeit mit dem Trocknungsmittel von etwa 0,0025 bis etwa 6 Stunden beträgt.

6. Verfahren nach Anspruch 1, bei dem das Siliconlösungsmittel mit der wässrigen Lösung bei einer Temperatur von etwa 10°C bis etwa 80°C in Kontakt gebracht wird.

## Revendications

1. Procédé de nettoyage à sec comprenant :
a) mettre en contact l'article avec un solvant siliconé ;
b) retirer le solvant siliconé ;
c) mettre en contact le solvant siliconé retiré avec une solution aqueuse ;
d) permettre au solvant siliconé et à la solution aqueuse de se séparer en couches ;
e) séparer la couche de solvant siliconé de la couche aqueuse ;
f) en option, sécher le solvant siliconé avec un agent de séchage ;
g) où le solvant est un siloxane linéaire ou branché comprenant un ou plusieurs composés de la formule structurelle :
M_{2+y+2z}DₓT_{y}Q_{z}
où
M est R³₃SiO_{1/2};
D est R³₂SiO_{2/2} ;
T est R³SiO_{3/2};
et Q est SiO_{4/2} ;
R¹, R² et R³ sont chacun indépendamment un radical d'hydrocarbure monovalent ; et x et y sont des entiers, où 0≤x ≤10 et 0≤y ≤10 et 0≤z ≤10.

2. Procédé selon la revendication 1, comprenant en outre l'agitation pour assurer un bon mélange du solvant et de la solution aqueuse.

3. Procédé selon la revendication 1, où la solution aqueuse est de l'eau, une solution saline, un mélange de base faible ou une combinaison de ceux-ci.

4. Procédé selon la revendication 1, où la solution aqueuse utilisée représente jusqu'à 1000 parties en poids pour 100 parties en poids de solvant siliconé.

5. Procédé selon la revendication 1, où le temps de contact avec l'agent de séchage est d'environ 0,0025 à environ 6 heures.

6. Procédé selon la revendication 1, où le solvant siliconé est mis en contact avec la solution aqueuse à une température d'environ 10°C à environ 80°C.
